# EUROPÄISCHE PATENTSCHRIFT

(11) **EP 0 328 149 B1**
(45) Veröffentlichungstag und Bekanntmachung des Hinweises auf die Patenterteilung: **09.11.1994**
(21) Anmeldenummer: 89102377.2
(22) Anmeldetag: 11.02.1989
(51) Int. Cl.: G09B 21/00

(54) **Blindenschrift-Darstellungsgerät**
Device for the representation of braille writing
Dispositif pour la représentation de l'écriture braille

(30) Priorität: 12.02.1988 DE 8801823 U
(43) Veröffentlichungstag der Anmeldung: 16.08.1989
(73) Patentinhaber: Hoffarth, Rainer, D-35112 Fronhausen (DE)
(72) Erfinder: Hoffarth, Rainer, D-35112 Fronhausen (DE)
(74) Vertreter: Olbricht, Karl Heinrich, Dipl.-Phys.

(56) Entgegenhaltungen:
- EP-A- 0 225 395
- EP-A- 0 237 090
- WO-A-80/01012
- FR-A- 2 408 879
- GB-A- 1 595 894

## Beschreibung

Die Erfindung betrifft ein Gerät zur Darstellung von Blindenschrift gemäß dem Oberbegriff von Anspruch 1. Ein derartiges Gerät ist aus der GB-A- 1 595 894 bekannt.

Bekannt sind Anordnungen zum Darstellen von Blindenschrift mittels Fühlstiften, die entgegen Federkraft über die Oberflächen einer Deckplatte anhebbar sind, um ein Zeichenmuster tastbar zu machen. Die Stiftelemente werden gemäß DE-A-3 035 852 alle gleichzeitig von einer hydraulisch oder pneumatisch betätigten Membran angehoben; die für das gewünschte Muster nicht benötigten Zeichen gleiten unter Federdruck wieder nach unten, während die übrigen in der angehobenen Stellung blockiert werden. Bei Anlegen einer elektrischen Spannung an piezokeramische Biegestreifen wölben diese sich zur Seite, um jeweils einen Fühlstift-Flansch zu untergreifen. Zu Löschung des Musters wird die Spannung abgeschaltet, so daß die Biegestreifen durch Rückkehr in ihre Ruhelage die Fühlstifte freigeben. Das Gerät erfordert eine verhältnismäßig große Bauhöhe und läßt nur bedingt einen modularen Aufbau zu. Die im wesentlichen achsparallel zu den Fühlstiften verlaufenden Biegestreifen sind einer hohen Knickbelastung ausgesetzt, was bei dem empfindlichen keramischen Material leicht zum Bruch und daher zu lästigen Betriebsstörungen führen kann.

Unter elektromechanischen Antriebs- oder Freigabevorrichtungen zeigt DE-A-2 364 342 eine Modulanordnung, deren unterhalb federbelasteten Fühlstiften sitzende Magnetkerne bzw. -anker mittels einzeln angesteuerter Spulen angehoben werden können. Zum Halten dient eine mechanische Verriegelung, die mit einem größeren Riegelmagneten entgegen einer Blattfeder quer zur Achsrichtung der Kerne und der Fühlstifte verschiebbar ist. Der Platzbedarf der Elektromagnete und ihre wechselseitige Beeinflussung erschwert die Verwirklichung dieser recht hohen Konstruktion, die zur Abstützung angehobener Stifte lediglich einen Querriegel vorsieht, der zur Aufnahme größerer Kräfte - wie etwa zum Drucken gesetzter Muster - kaum geeignet ist.

Gemäß DE-A-2 754 224 lassen sich Zeilenanordnungen in Blindenschrift aufbauen. Unterhalb von Magnetstößeln für die einzelnen Fühlstifte ist eine Entriegelungsplatte mit seitlichen Taschen für Stahlkugeln vorhanden, die bei Erregung einer Magnetspule unter den betreffenden Stößel gezogen werden und ihn in angehobener Position halten. Beim Verschieben der Platte gelangen die Arretierkugeln in die seitlichen Taschen zurück und die Stößel fallen sämtlich in die abgesenkte Stellung herunter. Streufelder bewirken auch hier Unsicherheiten des Betriebes; magnetische Kurzschlüsse sollen dem begegnen, setzen aber relativ großen Aufwand und zusätzlichen Platzbedarf voraus. Ohnehin ist die Bauhöhe beträchtlich.

Bei einem Display nach US-C-4 266 936 werden neben den Fühlstiften - wiederum etwa achsparallel - angeordnete Bimetallstreifen benutzt, welche sich unter elektrischen Strom erwärmen und dann zur Seite biegen, um nach oben federbelastete Stifte freizugeben. Die Vorrichtung arbeitet mit einer gewisssen thermischen Trägheit. Wegen recht beachtlicher Stromstärken werden auch größere Wärmemengen erzeugt, deren Abführung Probleme bereiten kann.

Aus EP-A-0 237 090 ist ein Blindenschrift-Display aus Modulen bekannt, die jeweils in einem Oberteil eine ortsfeste Halteplatte für Fühlstifte haben, welche mittels an einem unteren Träger angeordneter piezoelektrischer Biegestreifen des zugeordneten Moduls anheb- und absenkbar sind. Diese kann eine Braille-Einheit für nur ein Zeichen bilden, doch läßt sich auch eine Displayzeile oder ein Muster zusammensetzen. Man braucht jedoch stets eine nachteilig große Dimensionierung der benutzten Biegestreifen, von denen sowohl die in jeder Position benötigte Haltekraft als auch die Stellkraft zum Setzen der Fühlstifte aufgebracht werden muß. Werden letztere aber durch Finger-Gegendruck belastet, so ist das Setzten kaum oder nicht möglich.

Es besteht mithin ein Bedürfnis an einer Weiterentwicklung. Ein wichtiges Ziel der Erfindung ist es, ein Gerät der eingangs genannen Art mit einfachen und wirtschaftlichen Mitteln so zu verbessern, daß ein möglichst flacher Aufbau von wählbarer Flächenausdehnung geschaffen werden kann, so daß fallweise eine gewünschte Schriftfeld-Größe herstellbar ist. Ferner strebt die Erfindung an, mit wenigen Bauteilen eine betriebszuverlässige Anordnung zu schaffen, die je nach Bedarf als Lesegerät oder auch zum Drucken gesetzter Muster benutzt werden kann.

Das Prinzip der Erfindung ist im kennzeichnenden Teil von Anspruch 1 angegeben. Ausgestaltungen sind Gegenstand der Ansprüche 2 bis 26.

Ausgehend von einem Gerät zur tastbaren Darstellung von Blindenschrift mit gerundete Kuppen aufweisenden Fühlstiften, die senkrecht zu einer Deckplatte in ihr geführt und über deren Außenfläche anhebbar bzw. unter diese absenkbar sind, mit die einzelnen Fühlstifte umschließenden Druckfedern, welche die Fühlstifte jeweils unter Abstützung an einem Flansch zu einer Endstellung hin belasten, und mit einer elektrisch steuerbaren Ver- und Entriegelungsvorrichtung, wobei das Gerät aus Modulen zusammengesetzt ist, die jeweils aus einem Oberteil mit ortsfester Halteplatte für die Fühlstifte des Moduls und aus einem unteren Träger bestehen, der eine Hebe- bzw. Absenk-Einrichtung des Moduls aufweist oder selbst bildet, sieht die Erfindung laut Anspruch 1 vor, daß die Druckfedern die Fühlstifte zu einer im Oberteil definierten unteren Endstellung hin belasten und daß die Fühlstifte sich bis in den unteren Träger erstrecken, in dem sich die Ver- und Entriegelungseinrichtung mit Riegelelementen befindet, welche waagrecht derart bewegbar sind, daß sie zum Verriegeln unter die Fühlstifte geschoben werden können.

Dies ergibt eine sehr übersichtliche und mit insgesamt geringem Aufwand realisierbare Konstruktion, die sich überaus bequem handhaben läßt. Der Modulaufbau erlaubt es, Schriftfelder gewünschter Größe durch bloße Aneinanderreihung der recht flach herstellbaren Einzelelemente zu erzeugen, wobei das robuste Gerät auch zu Druckzwecken dauerhaft eingesetzt werden kann. Wesentliche Vorteile der Erfindung beruhen darauf, daß für die einzelnen Braille-Punkte nur die Sperrelemente - und zwar ohne Hubenergie - bewegt werden müssen, wogegen die Fühlstifte alle gemeinsam angehoben bzw. abgesenkt werden. Dafür ist ein gemeinsamer Antrieb verwendbar, mit dem die Stellkraft für das Setzen der Fühlstifte mechanisch eingeleitet wird, wobei die einzelnen Stellglieder klein bemessen werden können.

Vorteilhaft ist es, wenn der Träger gemäß Anspruch 2 zu dem Oberteil höhenveränderlich ist, indem er am oder im Oberteil beweglich gelagert und insbesondere zumindest in kleinem Winkel schwenkbar ist. Lediglich durch Höhenveränderung des Trägers kann ein gesetztes Muster gelöscht werden; solange er jedoch in seiner Stellung verharrt, bleibt ein gesetztes Zeichenmuster bestehen. Zweckmäig kann laut Anspruch 3 die Position des Trägers zu dem Oberteil mittels eines Exzenters einstellbar verändert werden. Dies kann von Hand oder motorisch geschehen, beispielsweise mittels einer Kurbel, eines Schrittmotors o.dgl.

Bei der Weiterbildung gemäß Anspruch 4 weist der Träger Podeste auf, die den Bodenflächen der Fühlstifte zugeordnet sind und der Deckplatte des Oberteils im wesentlichen parallel gegenüberstehen. Wird also der Träger abgesenkt, so gleiten die mit ihrem Bodenflächen auf den Podesten stehenden Fühlstifte in ihrer Dekplatten-Führung zurück. Jeweils zwei benachbarte Fühlstifte können laut Anspruch 5 auf gleicher Podestebene abgestützt sein. Besonders zweckmäßig ist es, wenn nach Anspruch 6 eine Anzahl Podeste, insbesondere vier, an einem Ende des Trägers treppenförmig gestaffelt sind. Man benutzt dann Fühlstifte von entsprechend verschiedener Länge, namentlich also in vier Längen, so daß in bezug auf die Außenfläche der Deckplatte ein einheitlicher Überstand der Kuppen angehobener Fühlstifte erzielbar ist. In der Ausgestaltung von Anspruch 7 befindet sich über jedem Podest eine das untere Ende des abgestützten Fühlstiftes bzw. Fühlstiftpaares führende Buchse oder Doppelbuchse, die laut Anspruch 8 nach oben aufgeweitet, z.B. schwach konisch gestaltet sein kann, um die Beweglichkeit der Fühlstifte bei Winkeländerung infolge der Träger-Verschwenkung zu fördern.

Weil der Träger zugleich die Ver- und Entriegelungsvorrichtung haltert, sind zusätzliche Elemente nicht nötig. Vielmehr sind gemäß Anspruch 9 höhengleich mit den Podesten im Träger Kanäle oder Nuten vorgesehen, die Riegelelemente quer zu den Buchsen verlaufend haltern und/oder führen. Ein solcher Aufbau ist überaus einfach und kann mit sehr geringen Abmessungen verwirklicht werden, so daß sich die Module entsprechend schmal und flach ausbilden lassen. Infolgedessen ist das erfindungsgemäße Gerät sehr kompakt.

Wenn laut Anspruch 10 die vorderen Enden der Riegelelemente jeweils zumindest bis unter die Achse der zugeordneten Buchse bewegbar sind, wird jeder Fühlstift in angehobener Stellung auf zumindest der Hälfte seiner Bodenfläche abgesützt. Um Verkantungen und Blockierungen zu vermeiden, kann es günstig sein, nach Anspruch 11 die unteren Enden der Fühlstifte und/oder die vorderen Enden der Riegelelemente auslaufend zu gestalten, vorzugsweise mit Fasen oder Rundungen.

In der Ausgestaltung gemäß Anspruch 12 sind die Riegelelemente Ankerstößel, die durch Federn zu den Podesten hin belastet und mittels Magnetspulen entgegen der Federkraft zurückziehbar sind. Hierbei können die Magnetspulen sowie die Federn laut Anspruch 13 in den Kanälen bzw. Nuten des Trägers angebracht sein. Diese Anordnung ist raumsparend und ermöglicht durch geeignete Polung gleichzeitig eine Herabsetzung von Streufeldern auf ein unschädliches Maß. Man kann benachbarte Magnetspulen jeweils gegenpolig verwenden, wodurch sich auf einfache Weise magnetische Rückschlüsse bilden. Da die Magnetspulen quer zu der Bewegungsrichtung der Fühlstifte angeordnet sind, wird - im Gegensatz zur herkömmlichen Technik - erheblich an Bauhöhe gespart.

In bevorzugter Ausgestaltung der Erfindung, für die selbständiger Schutz in Anspruch genommen wird, sieht Anspruch 14 vor, daß die Riegelelemente Piezo-Biegestreifen sind, deren frei Enden von der Seite her unter die jeweils zugeordneten Buchsen einschwenkbar und von diesen weg zur Seite ausschwenkbar sind. Da die Biegestreifen selbst elastische Elemente sind, benötigt man keine zusätzlichen Federn. Das trägt wesentlich zu gesteigerter Betriebszuverlässigkeit bei und macht auch sehr geringe Abmessungen möglich. Wenngleich als Biegestreifen z.B. auch Bimetallelemente erfindungsgemäß verwendbar sind, werden bevorzugt piezokeramische Streifen eingesetzt, die sehr schnell ansprechen und bei deren Betätigung keine Stromwärme entsteht bzw. abgeführt werden muß.

Die Maßnahme von Anspruch 15, wonach die Biegestreifen in bezug auf die Podestebene hochkant angeordnet sind, gewährleistet einerseits geringe Bruchanfälligkeit und andererseits hohe Druckbelastbarkeit der Fühlstifte. Auch ist es möglich, mit einem kleinen Stellweg auszukommen, und zwar ohne Knickbelastung der Biegestreifen.

Zweckmäßig sind die Riegelelemente laut Anspruch 16 an ihren hinteren Enden mit elektrischen Anschlüssen versehen. Dies ermöglicht es, den Magnetspulen bzw. piezokeramischen Biegestreifen o.dgl. die Steuer- oder Betriebsspannung auf einfache Weise zuzuführen. Da die Riegelelemente in den Kanälen bzw. Nuten des Trägers sitzen, können die Enden frei auslaufen und sich z.B. durch Lötfahnen, Drähte o.dgl. fortsetzen. Zur Stabilität der Anordnung trägt es bei, wenn die Biegestreifen nach Anspruch 17 mit ihren Anschluß-Enden in den Kanälen bzw. Nuten mechanisch festgelegt sind. Das erhöht außerdem die Kontaktsicherheit, da Bewegungen an den Anschlüssen selbst nicht stattfinden. Die Erfindung sieht ferner gemäß Anspruch 18 vor, daß der Träger eine mit den elektrischen Anschlüssen leitend verbundene Steuerplatine haltert. Infolgedessen finden Relativbewegungen am Träger zur Ansteuerung der einzelnen Riegelelemente nicht statt. Hingegen können flexible Leiter zu einer anderen Platine bzw. elektrischen Leiterplatte führen, die nach Anspruch 19 zur Stromversorgung am Oberteil angebracht ist. Die dort mögliche ortsfeste Verdrahtung gestattet es, herkömmlich Verbindungselemente vorzusehen, die zur elektrischen Verbindung der Module untereinander und mit einem Steuerteil dienen.

Mechanisch ist es günstig, wenn laut Anspruch 20 zumindest vier Module prallel zeinander zu einer geschlossenen Einheit verbunden sind, insbesondere mittels durchgehender Gewindestangen.

Ein solcher Block hat hohe Festigkeit und erlaubt die Darstellung von wenigstens vier Blindenschrift-Zeichen durch maximal je acht Punkte.

Sehr günstig ist es ferner, daß die Fühlstifte gemäß Anspruch 21 einteilig ausgebildet sein können, beispielsweise aus glasfaserverstärktem Kunststoff. Zylindrische Stifte mit nur einem Flansch genügen. Anzumerken ist jedoch, daß erfindungsgemäß auch Metallstifte geeignet sind.

Ein vorteilhafter Aufbau ist gegeben, wenn laut Anspruch 22 jedes Modul Seitenwangen mit einer Lagerbohrung aufweist, die eine den Träger halternde Achse oder Welle aufnimmt. Dadurch erübrigt sich eine zusätzliche Mechanik. Die Achse bzw. Welle kann nach Anspruch 23 als einseitig abgeflachter Exzenter ausgebildet sein, der in einer Lagerausnehmung des Trägers sitzt und wenigstens eine etwa ebene Anlagefläche hat. Diese Anordnung erlaubt es, die Höhenverstellung des Trägers auf sehr einfache Weise vorzunehmen. Nach Bedarf kann die Punkthöhe der Stifte besonderen Wünschen angepaßt werden. Zweckmäßig ist gemäß Anspruch 25 am Träger und/oder am Oberteil ein Anschlag zur Begrenzung der Höhenveränderung des Trägers angeordnet.

Für die Mechanik ist es ferner vorteilhaft, wenn der Träger nach Anspruch 25 federbelastet ist, namentlich zu dem Oberteil hin. Infolgedessen wirkt eine Rückstellkraft, die lediglich freigegeben zu werden braucht, um eine erwünschte Gegenbewegung des Trägers hervorzurufen. In diesem Zusammenhang sieht die Erfindung gemäß Anspruch 26 vor, daß die Module des Gerätes eine gemeinsame Blattfeder haben, die auf alle Träger wirkt. Daher ist jeder einzelne Stift auf dem Träger besonders fest abgestützt und entsprechend hoch belastbar. Gleichzeitig ist sichergestellt, daß die einzelnen Riegelelemente der gesetzten Stifte nur gering belastet werden.

Weitere Merkmale, Einzelheiten und Vorteile der Erfindung ergeben sich aus dem Wortlaut der Patentansprüche sowie aus der folgenden Erläuterung von Ausführungsbeispielen anhand der Zeichnung. Darin zeigen:
- Fig. 1: eine Schnittansicht eines Moduls für ein erfindungsgemäßes Gerät zum Darstellen von Blindenschrift,
- Fig. 2: eine Draufsicht auf das Modul von Fig. 1, mit weiteren angedeuteten Modulen,
- Fig. 3: eine Schnittansicht einer anderen Modul-Ausführungsform,
- Fig. 4: eine Draufsicht auf das Modul von Fig. 3,
- Fig. 5: eine Schnittansicht einer weiteren Ausführungsform eines Moduls nach der Erfindung,
- Fig. 6: eine Draufsicht, teilweise im Schnitt, auf das Modul von Fig. 5,
- Fig. 7a, 7b, 7c: je eine Seitenansicht, Draufsicht bzw. Stirnansicht des Oberteils noch einer anderen Modul-Bauform,
- Fig. 7d und 7e: je eine Schnittansicht entsprechend den Linien d-d bzw. e-e in Fig. 7a,
- Fig. 8: eine Teil-Schnittansicht entsprechend Fig. 7a mit eingesetzten Platinen,
- Fig. 9a, 9b, 9c: je eine Seitenansicht, Draufsicht bzw. Stirnansicht eines Trägers für die Modul-Bauform entsprechend Fig. 7a, 7b, 7c,
- Fig. 9d: eine Draufsicht des Trägers von Fig. 9a, 9b, 9c,
- Fig. 10a: eine vergrößerte Draufsicht auf ein Ende des Trägers von Fig. 9b,
- Fig. 10b: eine vergrößerte Stirnansicht entsprechend Fig. 9a, teilweise im Schnitt entsprechend der Linie b-b von Fig. 10a,
- Fig. 11: eine isolierte Draufsicht auf eine Ebene eines Trägers, ähnlich der Druntersicht von Fig. 9d, und
- Fig. 12: einen Vertikalschnitt entsprechend der Linie a-a in Fig. 11.

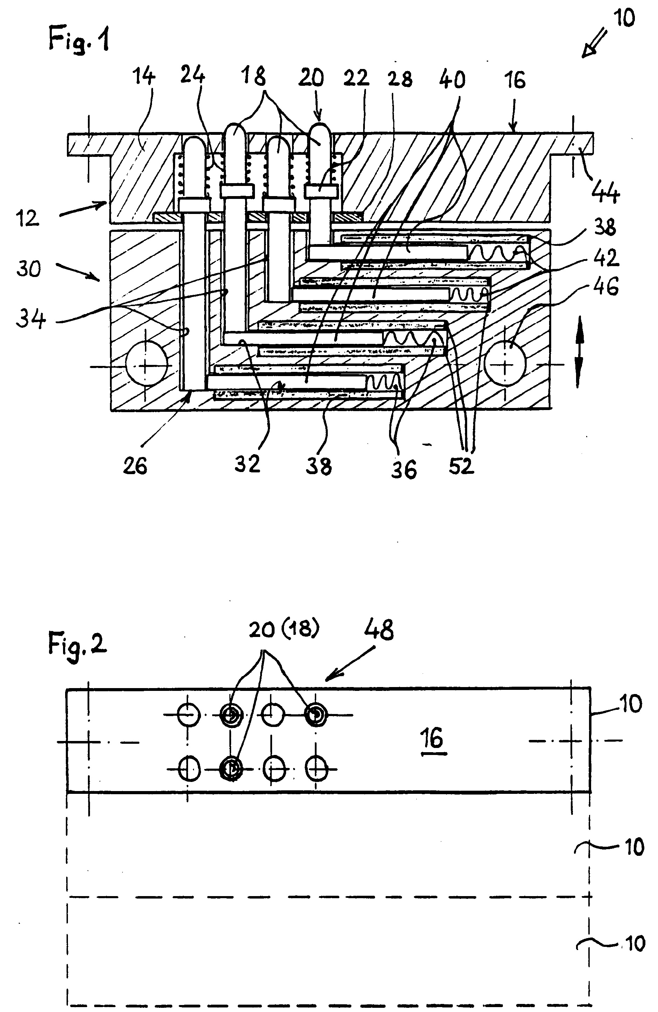

Das in Fig. 1 und 2 dargestellte, allgemein mit 10 bezeichnete Modul besteht aus einem Oberteil 12 und einem Träger 30, der - wie in Fig. 1 durch Doppelpfeil schematisch angedeutet - gegenüber dem Oberteil auf und ab beweglich ist. Dazu kann eine Stangenhalterung 46 vorgesehen sein, die von einer (nicht gezeichneten) Mechanik höhenveränderlich bewegbar ist.

Der Oberteil 12 hat eine Deckplatte 14, in der Fühlstifte 18 geführt sind, und zwar in zueinander parallelen Bohrungen. Die Fühlstifte 18 haben Kuppen 20, die in angehobener Stellung der Fühlstifte 18 die Außenfläche 16 tastbar überragen, jedoch in abgesenkter Stellung der Fühlstifte 18 in der Deckplatte 14 verschwinden.

Die Fühlstifte 18 haben jeweils einen Flansch 22, an dem sich eine Druckfeder 24 abstützt, die den Fühlstift 18 im oberen Bereich umschließt und an der Innenfläche der Deckplatte 14 ihr Widerlager findet. Die Flansche 22 können an einer in die Deckplatte 14 unten eingelassenen Halterplatte 28 zur Auflage kommen.

Im unteren Bereich setzen sich die Fühlstifte 18 in vorgegebenen Längen fort. Ihre Bodenflächen 26 können auf Podesten 32 des Trägers 30 zur Anlage kommen. Dabei sind die Fühlstifte 18 in Buchsen 34 des Trägers 30 höhenbeweglich geführt. Soweit das Modul 10 so angeordnet ist, daß die Außenfläche 16 der Deckplatte 14 horizontal verläuft, stehen die darin angeordneten Führungsbohrungen für die Fühlstifte 18 und mithin diese selbst senkrecht. Dementsprechend sind auch die Buchsen 34 im Träger 30 vertikal angeordnet. Die Podeste 32 und die mit ihnen höhengleichen Kanäle bzw. Nuten 36 im Träger 30 verlaufen waagerecht, also quer zu den Fühlstiften 18.

In den Kanälen bzw. Nuten 36 befinden sich Magnetspulen 38, bevorzugt mit abwechselnd entgegengesetzter Polung. Im Inneren der Magnetspulen 38 sind Ankerstößel 40 axialbeweglich, die sich mit Federn 42 an einem Ende der Kanäle bzw. Nuten 36 abstützen, wo auch die Anschlüsse 52 der Magnetspulen 38 angeordnet sind. Die Federn 42 belasten die Ankerstößel 40 zu den jeweils zugeordneten Fühlstiften 18 hin.

Die Kanäle bzw. Nuten 36 im Träger 30 bilden eine treppenförmige Anordnung und sind so gestaffelt, daß jeder Ankerstößel bis in eine zugehörige Buchse 34 vordringen und darin seinen Anschlag finden kann. Wird nun der Träger 30 gegenüber dem Oberteil 12 abgesenkt, so kommen die Flansche 22 der Fühlstifte 18 an der Halteplatte 28 zur Anlage, während die Bodenfläche 26 der Fühlstifte 18 sich von der Stützfläche im Träger 30 abhebt. Bei genügender Absenkung schieben die Druckfedern 42 die Ankerstößel 40 nach vorn, d.h. jeweils unter die Bodenfläche 26 des zugehörigen Fühlstiftes 18. Bei anschließendem Anheben des Trägers 30 ragen dann sämtliche Fühlstifte 18 mit ihren Kuppen 20 über die Außenfläche 16 des Oberteils 12 vor. Sollen nur einzelne Fühlstifte 18 in dieser Weise gesetzt werden, so werden die übrigen dadurch in die abgesenkte Position gebracht, bei der die Bodenfläche 26 auf dem zugehörigen Podest 32 aufruht, daß die betreffenden Magnetspulen 38 erregt werden, wodurch die darin befindlichen Ankerstößel 40 entgegen der Kraft der Federn 42 zurückgezogen werden, wie in Fig. 1 für den untersten und den drittuntersten Ankerstößel 40 gezeigt. Dadurch kann sich beispielsweise ein Muster ergeben, wie in Fig. 2 im Zeichenfeld 48 der Außenfläche 16 schematisch dargestellt. Aus dieser Figur erkennt man zugleich, daß weitere Module 10 flächig an das erste Modul angeschlossen und mit ihm zu einem festen Block verbunden werden können, der das erfindungsgemäße Gerät bildet.

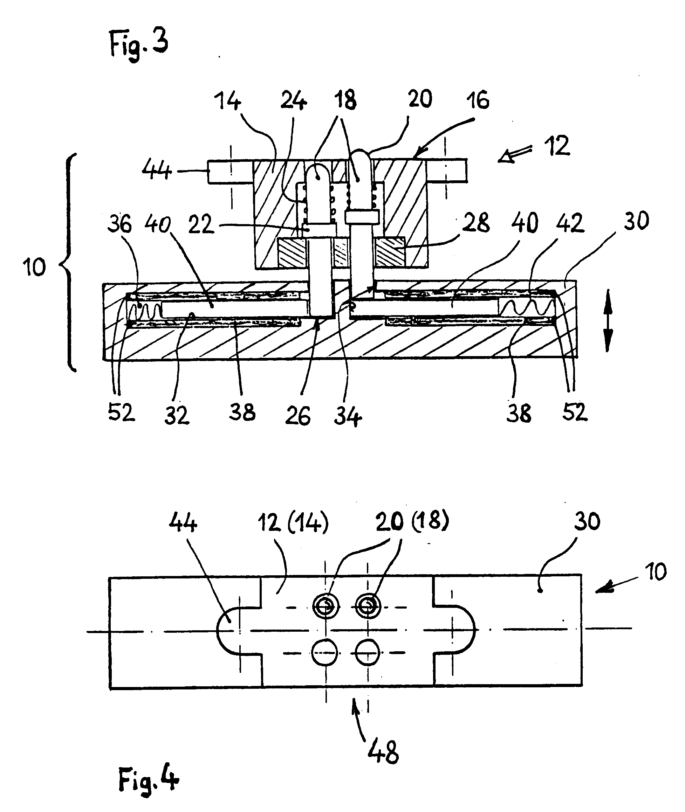

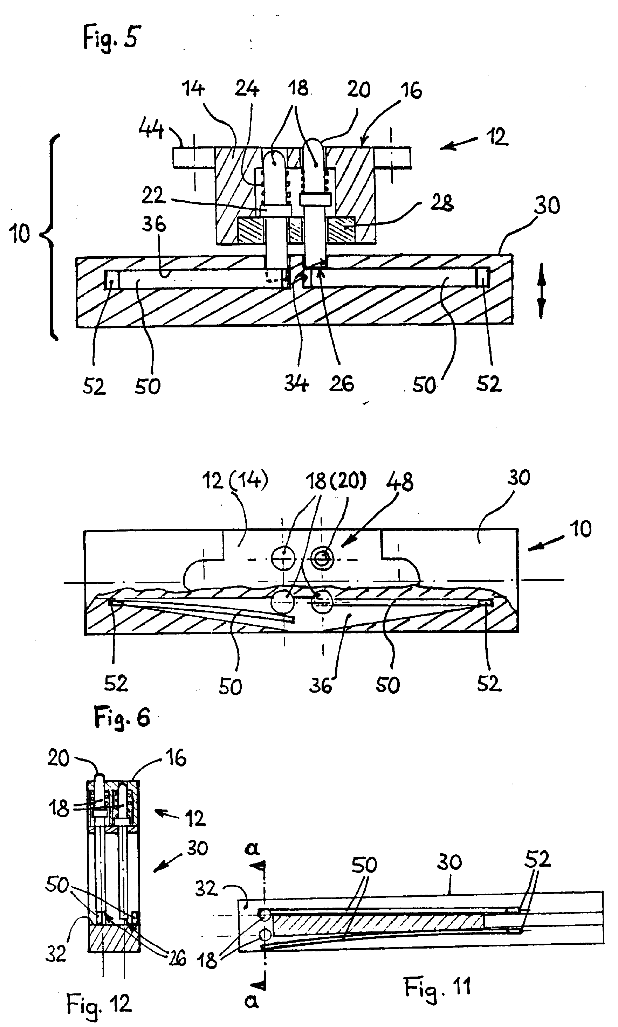

Auch bei der in Fig. 3 und 4 dargestellten Modul-Bauform ist ein Oberteil 12 des Moduls 10 ortsfest und ein darunter angeordneter Träger 30 vertikal beweglich, wie durch den Doppelpfeil in Fig. 3 angedeutet. Es finden wiederum zylindrische Fühlstifte 18 Verwendung, die im oberen Bereich unter federnder Abstützung in der Deckplatte 14 sowie in der Halteplatte 28 höhenbeweglich geführt sind. An letzterer können sich Flansche 22 der Fühlstifte 18 abstützen.

Im Prinzip entspricht die Anordnung von Fig. 3 und 4 derjenigen von Fig. 1 und 2, doch liegen sich hier Magnetspulen 38 in Kanälen 36 des Trägers 30 auf gleicher Ebene gegenüber. Dementsprechend sind auch die zugeordneten Podeste 32 untereinander höhengleich. Man erkennt, daß man bei dieser Ausführungsform für ein Vierpunkt Zeichenfeld 48 (Fig. 4) mit je zwei Magnetpaaren beiderseits der vier Fühlstifte 18 auskommt. Im übrigen entspricht die Funktion der oben beschriebenen. Soll also ein Fühlstift 18 voll abgesenkt werden (in Fig. 3 links), so daß seine Bodenfläche 26 auf dem Podest 32 aufruht, so wird die betreffende Magnetspule 38 erregt und der Ankerstößel 40 dadurch entgegen Federkraft zurückgezogen. Ohne Erregung drückt jedoch die Druckfeder 42 den Ankerstößel 40 nach vorn, so daß er bis in die Buchse 34 hineinragt und dort anschlägt, vorausgesetzt, daß der Träger 30 vom Oberteil 12 genügend abgesenkt war. Wird der Träger 30 dann angehoben, so kommt die Bodenfläche 26 des betreffenden Fühlstiftes 18 auf dem vorderen Ende des vorgeschobenen Ankerstößels 40 zur Auflage, so daß der Stift angehoben wird und seine Kuppe 20 die Außenfläche 16 überragt.

Man erkennt, daß die Anordnung von Fig. 3 und 4 zum Zeilenaufbau mit Vierpunkt-Zeichenfeldern 48 geeignet ist, während die Ausführungsform von Fig. 1 und 2 - bei etwas größerer Bauhöhe - zur Darstellung von Achtpunkt-Zeichen geeignet und vorgesehen ist (Fig. 2).

Allgemein entspricht die Bauform von Fig. 5 und 6 derjenigen von Fig. 3 und 4. Als Riegelelemente dienen hier jedoch piezokeramische Biegestreifen 50, die in den Kanälen 36 des Trägers 30 an den mit Anschlüssen 52 versehenen Enden festgelegt sind (Fig. 6). Im gezeichneten Beispiel liegt ein Biegestreifen 50 im Ruhezustand (rechts in Fig. 5 und 6) an einer inneren Trennwand des Trägers 30 an, und ein Fühlstift 18 stützt sich mit seiner Bodenfläche 26 auf dem freien Ende dieses Biegestreifens 50 ab, so daß der Fühlstift 18 angehoben ist und seine Kuppe 20 über die Außenfläche 16 des Oberteils 12 vorsteht. Wird nun elektrische Spannung angelegt, so entsteht der in Fig. 5 und 6 links dargestellte Zustand. Der Biegestreifen 50 biegt sich aus seiner Ebene heraus und schwenkt dadurch mit seinem freien Ende zur Seite, wodurch der betreffende Fühlstift 18 sich unter dem Druck seiner Feder 24 absenkt, bis der Flansch 22 an der Halteplatte 28 anschlägt.

Den beschriebenen Ausführungsformen ist gemeinsam, daß ein Halterand 44 des Oberteils 12 zu dessen Festlegung an einem (nicht gezeichneten) Gehäuse dienen kann.

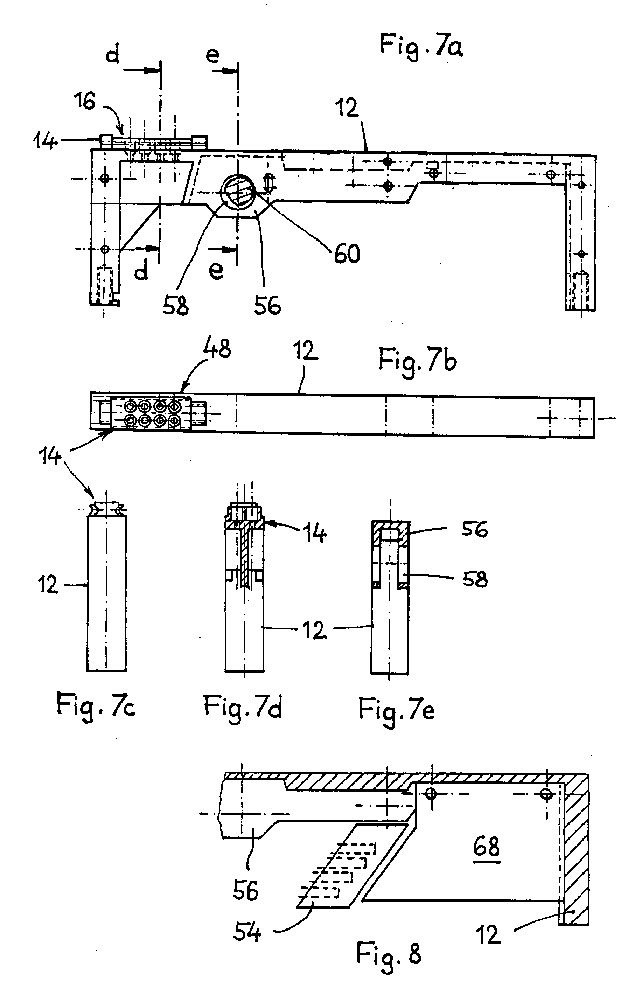

Die Fig. 7 bis 12 zeigen ein weiteres praktisches Ausführungsbeispiel von Modulen für ein erfindungsgemäßes Gerät. Zunächst ist in Fig. 7a bis 7e und Fig. 8 der Oberteil 12 dargestellt, dessen Deckplatte 14 hier etwas nach oben absteht, so daß die Außenfläche 16 mit dem Zeichenfeld 48 höher liegt als die übrigen Abschnitte des Oberteils 12. Dieser kann ein Kunststoff-Spritzteil mit Seitenwangen 56 sein, in denen eine Lagerbohrung 58 vorhanden ist. Zur Querverbindung einzelner Module 10 miteinander ist eine Anzahl von (nicht näher bezeichneten) kleinen Bohrungen vorgesehen, durch die eine Verschraubung, Verstiftung o.dgl. möglich ist. Ein freier Bereich des Oberteils 12 kann innen bzw. unten eine Leiterplatte 68 aufnehmen (Fig. 8), die zur Stromversorgung einer Steuerplatine 54 dient, welche am zugeordneten Träger 30 angebracht ist.

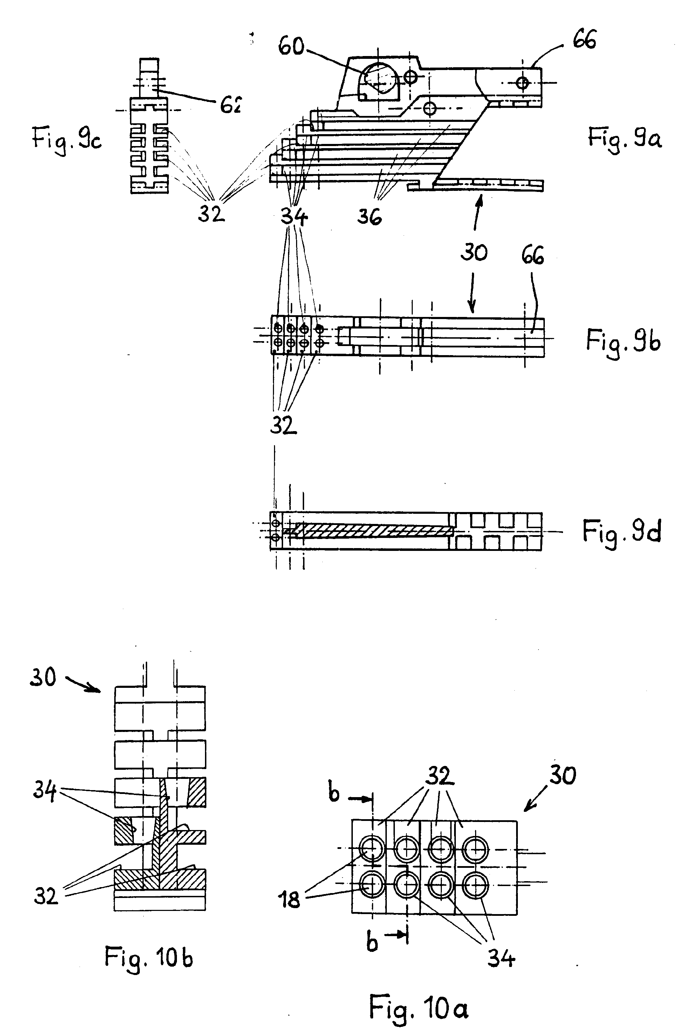

Ein solcher Träger 30 ist in Fig. 9a bis 9d dargestellt. Er hat in einem oberen Bereich eine Lagerausnehmung 62, in die eine als Exzenter dienende, einseitig mit einer Abflachung versehene Achse oder Welle 60 einsetzbar ist, wie in Fig. 7a und 9a mit schematischem Querschnitt angedeutet. Der Träger 30 kann dann um die Achse bzw. Welle 60 so weit bewegt werden, bis ein als Anschlag 66 ausgebildetes Ende am Oberteil 12 innen ankommt. In Anbetracht der geringen Stellwege, die für eine Absenkung oder Anhebung der Fühlstifte 18 benötigt werden, genügt eine geringe Verschwenkung des Trägers 30.

Dieser ist an einem Vorderteil (Fig. 9a und 9b; 10a) treppenförmig gestaltet und mit Kanälen 36 versehen, die jeweils waagrecht und höhengleich mit einem Podest 32 verlaufen. Über letzterem ist jeweils eine Buchse 34 angeordnet, die das untere Ende des zugeordneten Fühlstiftes 18 führt und zweckmäßig nach oben konisch erweitert ist, um seine Beweglichkeit trotz der Winkeländerung des Trägers 30 zu sichern.

Am anderen Ende, d.h. unterhalb des Anschlags 66, hat der Träger 30 eine Ausnehmung für die mit ihm fest verbundene Steuerplatine 54 (Fig. 9a und Fig. 8). Von dieser können (nicht gezeichnete) flexible Leitungen zu der Leiterplatte 68 führen, die zur Stromversorgung vorgesehen ist.

Während Fig. 10a und 10b vergrößert die Abstütz- und Führungsanordnung für die Fühlstifte 18 zeigen, geht aus Fig. 11 und 12 hervor, wie piezokeramische Biegestreifen 50, die in den Kanälen bzw. Nuten 36 des Trägers 30 hochkant angeordnet sind, die Ver- und Entriegelung bewirken. Oben in Fig. 11 und links in Fig. 12 ist ein Biegestreifen 50 dargestellt, der die Bodenfläche des in angehobener Stellung befindlichen Fühlstiftes 18 untergreift und abstützt. Dagegen zeigt die untere Hälfte von Fig. 11 und die rechte Hälfte von Fig. 12 eine Entriegelungsstellung, bei welcher der betreffende Fühlstift 18 abgesenkt ist, nachdem durch Spannungs-Beaufschlagung des zugehörigen Biegestreifens 50 dieser unter dem Fühlstift 18 zur Seite wegbewegt wurde.

Man erkennt, daß das erfindungsgemäße Gerät bequem in der von Blinden häufig bevorzugten Weise gestaltet werden kann, wonach nur diejenigen Zeichen bzw. Punkte gesetzt werden, die auch sogleich eine Information vermitteln sollen, während die Lesefläche 16 im übrigen leer bleibt (so daß die Kuppen 20 der eingefahrenen Fühlstifte 18 nicht tastbar sind).

Wesentliche Vorteile der Erfindung beruhen darauf, daß der Modulaufbau eine sehr einfache und somit preisgünstige Leseeinrichtung für Blinde schafft, die z.B. zum Anzeigen von Zahlen bei Uhren, Thermometern usw., aber auch für längere Texte nutzbar ist. Nach Wahl lassen sich Zeilen-Displays auch zum Drucken benutzen. Die Ansteuerung erfolgt elektronisch, bevorzugt über einen Mikroprozessor, wobei die Stromversorgung über ein Netzgerät oder auch mit Batteriespeisung erfolgen kann.

Von Bedeutung ist insbesondere, daß für das Stellen der Tast- bzw. Fühlstifte 18 nur geringe Kräfte benötigt werden. Zum Heben und Senken wird der Träger 30 bewegt, der dank seiner speziellen Gestaltung in flacher Bauweise und mit kleinem Gewicht ausgeführt werden kann. Dabei verlaufen die Riegelelemente 38, 40; 50 quer zu den Fühlstiften 18, so daß deren Ver- und Entriegelung schnell und stabil vor sich geht. Insgesamt werden nur wenige Bauteile benötigt, die sich überdies zu Baugruppen beliebiger Größe oder Kleinheit zusammensetzen lassen.

Im ortsfesten Oberteil 12 kommen abgesenkte Fühlstifte 18 mit ihrem Flansch 22 an der Halteplatte 28 zur Anlage. Diese nimmt also die Druckkräfte der Federn 24 auf, wenn der Träger 30 nach unten abgehoben ist. Dann können die Riegelelemente 40, 50 praktisch belastungsfrei angesteuert und betätigt werden, kurz bevor der Träger 30 zum Setzen des gewünschten Musters wieder angehoben wird. Dieser Vorteil bleibt auch erhalten, wenn Fühlstifte 18 ohne Federbelastung benutzt werden, was etwa im Ausführungsbeispiel von Fig. 7 bis 12 ohne weiteres möglich ist, weil die Stifte unter ihrem Eigengewicht von selbst die jeweils tiefste Lage einnehmen.

### Legende

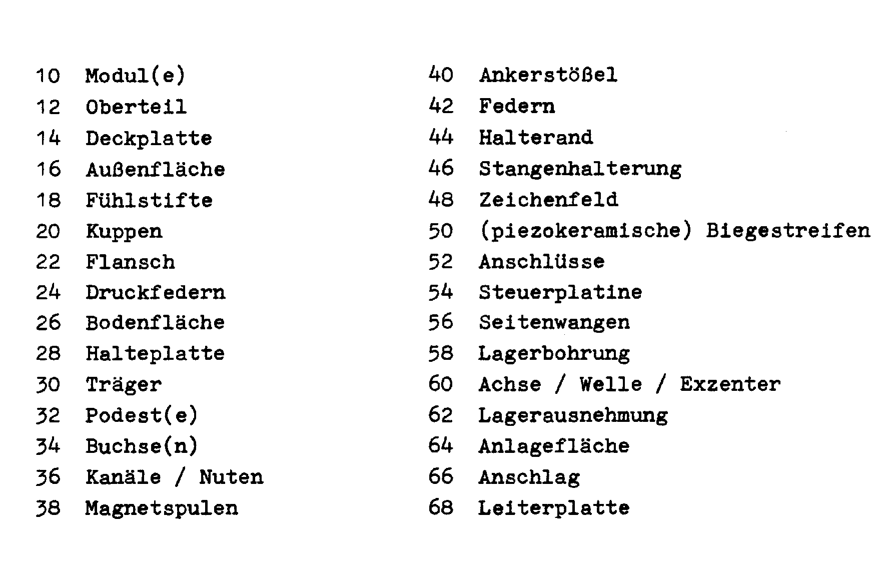

## Patentansprüche

1. Gerät zur tastbaren Darstellung von Blindenschrift, mit gerundete Kuppen aufweisenden Fühlstiften (18), die senkrecht zu einer Deckplatte (14) in ihr geführt und über deren Außenfläche (16) anhebbar bzw. unter diese absenkbar sind, mit die einzelnen Fühlstifte umschließenden Druckfedern (24), welche jeweils unter Abstützung an einem Flansch (22) die Fühlstifte zu einer Endstellung hin belasten, und mit einer elektrisch steuerbaren Ver- und Entriegelungsvorrichtung (38, 40; 50) für die Fühlstifte, wobei das Gerät aus Modulen (10) zusammengesetzt ist, die jeweils aus einem Oberteil (12) mit ortsfester Halteplatte (28) für die Fühlstifte (18) des Moduls und aus einem unteren Träger (30) bestehen, der eine Hebe- bzw. Absenk-Einrichtung des Moduls (10) aufweist oder selbst bildet, dadurch **gekennzeichnet,** daß die Druckfeder (24) die Fühlstifte (18) zu einer im Oberteil (12) definierten unteren Endstellung hin belasten und daß die Fühlstifte (18) sich bis in den unteren Träger (30) erstrekken, in dem sich die Ver- und Entriegelungsvorrichtung (38, 40; 50) mit Riegelelementen (Ankerstößel 40; piezokeramische Biegestreifen 50) befindet, welche waagrecht derart bewegbar sind, daß sie zum Verriegeln unter die Fühlstifte (18) geschoben werden können.

2. Gerät nach Anspruch 1, dadurch **gekennzeich****net**, daß der Träger (30) zu dem Oberteil (12) höhenveränderlich angeordnet ist, indem er am oder im Oberteil (12) beweglich gelagert, insbesondere zumindest im Ausmaß eines spitzen Winkels schwenkbar ist.

3. Gerät nach Anspruch 1 oder 2, dadurch **gekennzeichnet,** daß die Position des Trägers (30) zu dem Oberteil (12) mittels eines Exzenters (60), von Hand oder motorisch einstellbar veränderlich ist.

4. Gerät nach einem der Ansprüche 1 bis 3, dadurch **gekennzeichnet,** daß der Träger (30) Podeste (32) aufweist, die den Bodenflächen (26) der Fühlstifte (18) zugeordnet sind und der Deckplatte (14) des Oberteils (12) im wesentlichen parallel gegenüberstehen.

5. Gerät nach Anspruch 4, dadurch **gekennzeichnet,** daß die Podeste (32) jeweils zwei benachbarte Fühlstifte (18) auf gleicher Ebene abstützen.

6. Gerät nach Anspruch 4 oder 5, dadurch **gekennzeichnet,** daß eine Anzahl Podeste (32), insbesondere vier, treppenförmig gestaffelt an einem Ende des Trägers (30) angeordnet sind.

7. Gerät nach einem der Ansprüche 4 bis 6, dadurch **gekennzeichnet,** daß über jedem Podest (32) eine das untere Ende des abgestützten Fühlstiftes (18) bzw. Fühlstiftpaares führende Buchse (34) oder Doppelbuchse angeordnet ist.

8. Gerät nach Anspruch 7, dadurch **gekennzeichnet,** daß die Buchsen (34) bzw. Doppelbuchsen nach oben aufgeweitet, namentlich schwach konisch gestaltet sind.

9. Gerät nach einem der Ansprüche 4 bis 8, dadurch **gekennzeichnet,** daß höhengleich mit dem Podesten (32) im Träger (30) Kanäle oder Nuten (36) vorhanden sind, welche quer zu den Buchsen (34) verlaufende Riegelelemente (40, 50) haltern und/oder führen.

10. Gerät nach Anspruch 9, dadurch **gekennzeichnet,** daß die vorderen Enden der Riegelelemente (40, 50) jeweils zumindest bis unter die Achse der zugeordneten Buchse (34) bewegbar sind.

11. Gerät wenigstens nach Anspruch 4 und Anspruch 9 oder 10, dadurch **gekennzeichnet,** daß die unteren Enden der Fühlstifte (18) und/oder die vorderen Enden der Riegelelemente (40, 50) auslaufend gestaltet, vorzugsweise angefast und/oder gerundet sind.

12. Gerät nach einem der Ansprüche 1 bis 11, dadurch **gekennzeichnet,** daß die Riegelelemente Ankerstößel (40) sind, die durch Federn (42) zu den Podesten (32) hin belastet und mittels Magnetspulen (38) entgegen der Federkraft zurückziehbar sind.

13. Gerät wenigstens nach Anspruch 9 und 12, dadurch **gekennzeichnet,** daß die Magnetspulen (38) sowie die Federn (42) in den Kanälen bzw. Nuten (36) des Trägers (30) angebracht sind.

14. Gerät nach wenigstens einem der Ansprüche 1 bis 11, dadurch **gekennzeichnet,** daß die Riegelelemente insbesondere piezokeramische Biegestreifen (50) sind, deren freie Enden von der Seite her unter die jeweils zugeordneten Buchsen (34) einschwenkbar und von diesen weg zur Seite ausschwenkbar sind.

15. Gerät nach Anspruch 14, dadurch **gekennzeichnet,** daß die Biegestreifen (50) in bezug auf die Podestebene hochkant angeordnet sind.

16. Gerät nach wenigstens einem der Ansprüche 9 bis 15, dadurch **gekennzeichnet,** daß die Riegelelemente (40, 50) an ihren hinteren Enden mit elektrischen Anschlüssen (52) versehen sind.

17. Gerät nach Anspruch 15 und 16, dadurch **gekennzeichnet,** daß die Biegestreifen (50) mit ihren Anschluß-Enden (52) in den Kanälen bzw. Nuten (36) mechanisch festgelegt sind.

18. Gerät nach einem der Ansprüche 1 bis 17, dadurch **gekennzeichnet,** daß der Träger (30) eine mit den elektrischen Anschlüssen (52) leitend verbundene Steuerplatine (54) haltert.

19. Gerät nach einem der Ansprüche 1 bis 18, dadurch **gekennzeichnet,** daß zur Stromversorgung am Oberteil (12) eine elektrische Leiterplatte (68) angebracht ist.

20. Gerät nach einem der Ansprüche 1 bis 19, dadurch **gekennzeichnet,** daß zumindest vier Module (10) parallel zueinander zu einer geschlossenen Einheit verbunden sind, insbesondere mittels durchgehender Gewindestangen.

21. Gerät nach einem der Ansprüche 1 bis 20, dadurch **gekennzeichnet,** daß die Fühlstifte (18) einteilig ausgebildet, beispielsweise aus glasfaserverstärktem Kunststoff sind.

22. Gerät nach einem der Ansprüche 1 bis 21, dadurch **gekennzeichnet,** daß jedes Modul (10) Seitenwangen (56) mit einer Lagerbohrung (58) aufweist, die eine den Träger (30) halternde Achse oder Welle (60) aufnimmt.

23. Gerät nach Anspruch 22, dadurch **gekennzeichnet,** daß die Achse bzw. Welle (60) als einseitig abgeflachter Exzenter ausgebildet und im Träger (30) eine ihn aufnehmende Lagerausnehmung (62) mit wenigstens einer ebenen oder genähert ebenen Anlagefläche (64) vorhanden ist.

24. Gerät nach einem der Ansprüche 1 bis 23, dadurch **gekennzeichnet,** daß am Träger (30) und/oder am Oberteil (12) ein Anschlag (66) zur Begrenzung der Höhenveränderung des Trägers angeordnet ist.

25. Gerät nach wenigstens einem der Ansprüche 1 bis 24, dadurch **gekennzeichnet,** daß der Träger (30) federbelastet ist, namentlich zu dem Oberteil (12) hin.

26. Gerät nach Anspruch 25, dadurch **gekennzeichnet,** daß seine Module (10) eine gemeinsame Blattfeder haben, die auf alle Träger (30) wirkt.

## Claims

1. Device for the tactile representation of braille printing, including touch pins (18) with rounded tips, which pins are vertical to a top plate (14) and are guided therein for lifting beyond its outer face face (16) or for lowering under it, including compressions springs (24) supported on a flange (22) each and surrounding the individual touch pins for biassing them towards an end position, and including electrical means (38, 40; 50) for controlling the locking and unlocking of the touch pins, the device comprising modules (10) each having an upper portion (12) with a stationary guiding support (28) for the touch pins (18) of the respective module and having a lower base (30) that carries or itself forms lifting and/or lowering means of the module (10), wherein the compression springs (24) bias the touch pins (18) towards a lower end position defined in the upper portion (12) and wherein the touch pins (18) extend down into the lower base (30) in which the locking and unlocking means (38, 40; 50) are housed, the latter comprising locking elements (armature plunger 40; piezoceramic bending strips 50) adapted to be horizontally moved so as to be shifted under the touch pins (18) for locking them.

2. Device according to claim 1, wherein the base (30) is height-variable relative to the upper portion (12) at or in which it is movably supported, in particular by being tiltable at least to the extent of an acute angle.

3. Device according to claim 1 or claim 2, wherein the position of the base (30) relative to the upper portion (12) is adjustably variable by means of an eccentric (60), manually or via a motor.

4. Device according to any one of claims 1 to 3, wherein the base (30) includes lands (32) which are associated to the bottom faces (26) of the touch pins (18) and which are substantially horizontal opposite to the top plate (14) of the upper portion (12).

5. Device according to claim 4, wherein each land (32) supports two adjacent touch pins (18) on the same level.

6. Device according to claim 4 or 5, wherein a plurality of lands (32), in particular four lands, are staggered stairwise at one end of the base (30).

7. Device according to any one of claims 4 to 6, wherein above each land (32), there is a socket (34) or socket pair guiding the lower end of the touch pin (18) or pin pair supported.

8. Device according to claim 7, wherein the sockets (34) or sockets pairs enlarge upwardly, especially in the shape of a narrow cone.

9. Device according to any one of claims 4 to 8, wherein the base (30) comprises, at the levels of the lands (32), grooves (36) or channels for holding and/or guiding locking elements (40, 50) that extend transversely to the sockets (34).

10. Device according to claim 9, wherein the front ends of the locking elements (40, 50) are adapted to be moved at least underneath the axis of the associated socket (34).

11. Device at least according to claim 4 and to claim 9 or claim 10, wherein the lower ends of the touch pins (18) and/or the front ends of the locking elements (40, 50) have a run-out shape, being preferably bevelled or rounded.

12. Device according to any one of claims 1 to 11, wherein the locking elements comprise armature plungers (40) which are biassed towards the lands (32) by springs (42) and which are adapted to be withdrawn by solenoids (38) acting against the spring forces.

13. Device at least according to claims 9 and 12, wherein the solenoids (38) as well as the springs (42) are mounted in the grooves (36) or channels of the base (30).

14. Device according to at least one of claims 1 to 11, wherein the locking elements are, in particular, piezo-ceramic bending strips (50) whose free ends are adapted to be laterally tilted under the associated sockets (34) and to be laterally tilted off them.

15. Device according to claim 14, wherein the bending strips (50) stand on edge relative to the land level.

16. Device according to at least one of claims 9 to 15, wherein the rear ends of the locking elements (40, 50) are provided with electrical connections (52).

17. Device according to claims 15 and 16, wherein the bending strips (50) are mechanically anchored with their connecting ends (52) in the grooves (36) or channels.

18. Device according to any one of claims 1 to 17, wherein the base (30) supports a control board (54) conductively coupled to the electrical connections (52).

19. Device according to any one of claims 1 to 18, wherein an electrical circuit board (68) is attached to the upper portion (12) for power supply.

20. Device according to any one of claims 1 to 19, wherein at least four modules (10) are joined parallel to each other so as to form a closed unit, in particular by means of tapped through-bars.

21. Device according to any one of claims 1 to 20, wherein the touch pins (18) are integral, e.g. of glass fibre reinforced plastics.

22. Device according to any one of claims 1 to 21, wherein each module (10) includes side walls (56) having a support bore (58) for receiving a shaft (60) that carries the base (30).

23. Device according to claim 22, wherein the shaft (60) is shaped as an eccentric having a unilateral flat and wherein the base (30) contains a bearing hollow (62) having at least one plane or approximately plane engaging face (64) for receiving the shaft.

24. Device according to any one of claims 1 to 23, wherein a stop (66) is arranged at the base (30) and/or at the upper portion (12) for limiting the height variation of the base.

25. Device according to at least one of claims 1 to 24, wherein the base (30) is spring-biassed, in particular towards the upper portion (12).

26. Device according to claim 25, wherein its modules (10) have a common leaf spring acting upon all the bases (30).

## Revendications

1. Appareil destiné à la représentation palpable d'écriture braille, avec des tiges palpables (18) aux sommets arrondis, guidées dans une plaque de recouvrement (14) perpendiculairement à celle-ci et pouvant être déplacées au-dessus ou en dessous de la surface extérieure (16) de la plaque, avec des ressorts de pression (24) entourant les différentes tiges palpables et chargeant les tiges palpables vers une position finale en s'appuyant sur un collet (22), avec un dispositif de verrouillage et de déverrouillage (38, 40; 50) à commande électrique pour les tiges palpables, et en même temps appareil composé de modules (10) consistant respectivement en une partie supérieure (12) avec une plaque d'arrêt (28) fixe pour les tiges palpables (18) du module et en un support inférieur (30) ayant ou formant lui-même un dispositif de déplacement du module (10) vers le haut ou vers le bas, caractérisé en ce que les ressorts de pression (24) chargent les tiges palpables (18) vers une position finale inférieure définie dans la partie supérieure (12) et que les tiges palpables (18) vont jusque dans le support inférieur (30), dans lequel se trouve le dispositif de verrouillage et de déverrouillage (38, 40; 50) avec des éléments de verrouillage (coulisseaux d'induit 40; lames flexibles 50 en céramique piézoélectrique) pouvant être déplacés horizontalement de manière à pouvoir être poussés sous les tiges palpables (18) pour le verrouillage.

2. Appareil selon la revendication 1, caractérisé en ce que le support (30) est variable en hauteur par rapport à la partie supérieure (12) par le fait qu'il est logé mobilement sur ou dans la partie supérieure (12) et qu'il peut notamment être pivoté sur au moins l'étendue d'un angle aigu.

3. Appareil selon la revendication 1 ou 2, caractérisé en ce que la position du support (30) par rapport à la partie supérieure (12) peut être modifiée et réglée au moyen d'un excentrique (60), manuellement ou par moteur.

4. Appareil selon une des revendications 1 à 3, caractérisé en ce que le support (30) a des piédestaux (32) affectés aux surfaces de base (26) des tiges palpables (18) et opposés surtout parallèlement à la plaque de recouvrement (14) de la partie supérieure (12).

5. Appareil selon la revendication 4, caractérisé en ce que les piédestaux (32) donnent appui à respectivement deux tiges palpables (18) voisines sur un même niveau.

6. Appareil selon la revendication 4 ou 5, caractérisé en ce qu'un certain nombre de piédestaux (32), notamment quatre, est échelonné en escalier à une extrémité du support (30).

7. Appareil selon une des revendications 4 à 6, caractérisé en ce qu'une douille (34) ou double douille guidant l'extrémité inférieure de la tige palpable (18) ou de la paire de tiges palpables soulevées, est disposée au-dessus de chaque piédestal (32).

8. Appareil selon la revendication 7, caractérisé en ce que les douilles (34) ou doubles douilles sont élargies vers le haut, notamment en forme légèrement conique.

9. Appareil selon une des revendications 4 à 8, caractérisé en ce que dans le support (30), à la même hauteur que les piédestaux (32), il y a des canaux ou des rainures (36) tenant et/ou guidant des éléments de verrouillage (40, 50) de direction transversale par rapport aux douilles (34).

10. Appareil selon la revendication 9, caractérisé en ce que les extrémités avant des éléments de verrouillage (40, 50) peuvent être déplacées au moins jusqu'en-dessous de l'axe de la douille (34) correspondante.

11. Appareil selon au moins la revendication 4 et la revendication 9 ou 10, caractérisé en ce que les extrémités inférieures des tiges palpables (18) et/ou les extrémités avant des éléments de verrouillage (40, 50) sont de forme effilée, de préférence chanfreinée et/ou arrondie.

12. Appareil selon une des revendications 1 à 11, caractérisé en ce que les éléments de verrouillage sont des coulisseaux d'induit (40), chargés vers les piédestaux (32) par des ressorts (42) et pouvant être retirés contre la force du ressort par des bobines magnétiques (38).

13. Appareil selon au moins les revendications 9 et 12, caractérisé en ce que les bobines magnetiques (38) ainsi que les ressorts (42) sont montés dans les canaux ou rainures (36) du support (30).

14. Appareil selon au moins une des revendications 1 à 11, caractérisé en ce que les éléments de verrouillage sont notamment des lames flexibles en céramique piézoélectrique (50), dont les extrémités libres peuvent être pivotées latéralement sous les douilles correspondantes et retirées latéralement de celles-ci.

15. Appareil selon la revendication 14, caractérisé en ce que les lames flexibles (50) sont disposées de chant par rapport au plan du piédestal.

16. Appareil selon au moins une des revendications 9 à 15, caractérisé en ce que les éléments de verrouillage (40, 50) sont équipés de raccordements électriques (52) à leurs extrémités arrières.

17. Appareil selon les revendications 15 et 16, caractérisé en ce que les lames flexibles (50) sont fixées mécaniquement avec leurs extrémités de raccordement (52) dans les canaux ou rainures (36).

18. Appareil selon une des revendications 1 à 17, caractérisé en ce que le support (30) loge une platine de commande (54) connectée et reliée aux raccordements électriques (52).

19. Appareil selon une des revendications 1 à 18, caractérisé en ce qu'une plaquette de circuit électrique imprimé (68) est montée sur la partie supérieure (12) pour l'alimentation électrique.

20. Appareil selon une des revendications 1 à 19, caractérisé en ce qu'au moins quatre modules (10) sont reliés parallèlement entre eux, notamment par une tige filetée continue, en une unité fermée.

21. Appareil selon une des revendications 1 à 20, caractérisé en ce que les tiges palpables (18) sont d'une pièce, par exemple en matière plastique renforcée de fibres de verre.

22. Appareil selon une des revendications 1 à 21, caractérisé en ce que chaque module (10) a des limons latéraux (56) avec une perforation de palier (58) accueillant un axe ou un arbre (60) fixant le support (30).

23. Appareil selon la revendication 22, caractérisé en ce que l'axe ou l'arbre (60) a la forme d'un excentrique aplati d'un côté et qu'il y a dans le support (30) un évidement de palier (62) avec au moins une surface d'appui (64) plane ou approximativement plane accueillant l'excentrique.

24. Appareil selon une des revendications 1 à 23, caractérisé en ce que sur le support (30) et/ou la partie supérieure (12), est disposée une butée (66) pour limiter les variations de hauteur du support.

25. Appareil selon au moins une des revendications 1 à 24, caractérisé en ce que le support (30) est chargé par ressort, notamment vers la partie supérieure (12).

26. Appareil selon la revendication 25, caractérisé en ce que ses modules (10) ont un ressort à lames commun agissant sur tous les supports (30).
